# EUROPÄISCHE PATENTSCHRIFT

(11) **EP 0 579 019 B1**
(45) Veröffentlichungstag und Bekanntmachung des Hinweises auf die Patenterteilung: **13.05.1998**
(21) Anmeldenummer: 93110263.6
(22) Anmeldetag: 28.06.1993
(51) Int. Cl.: G02B 6/44

(54) **Anordnung zum Ablegen von Spleisskassetten für Lichtwellenleiter innerhalb einer Kabelmuffe**
Optical fibre splice cassette lay device for cable coupling box
Dispositif pour déposer des cassettes d'épissure pour guides d'ondes optiques dans un manchon à câble

(30) Priorität: 17.07.1992 DE 4223675
(43) Veröffentlichungstag der Anmeldung: 19.01.1994
(73) Patentinhaber: RXS Kabelgarnituren Gesellschaft mit beschränkter Haftung, D-58093 Hagen (DE)
(72) Erfinder: Latte, Frank-Helge, Dipl.-Ing., D-82269 Geltendorf (DE); Fröhlich, Franz-Friedrich, Dipl.-Ing., D-5800 Hagen Dahl (DE); Boscher, Georg, Dipl.-Phys., D-5800 Hagen 1 (DE); Behrendt, Martin, Dipl.-Phys., D-5800 Hagen 1 (DE)
(74) Vertreter: Fuchs, Franz-Josef, Dr.-Ing.

(56) Entgegenhaltungen:
- EP-A- 146 478
- EP-A- 333 316
- FR-A- 2 559 916
- US-A- 5 167 001

## Beschreibung

Die Erfindung betrifft eine Anordnung, bestehend aus mehreren Spleißkassetten für Lichtwellenleiter, aus einer Aufnahme für Überlangen von Lichtwellenleitern für jede Spleißkassette und einer Trägerplatte für jede Spleißkassette innerhalb einer Kabelmuffe, wobei mehrere Trägerplatten in einer Fixiervorrichtung gehalten sind und jede Trägerplatte einzeln aus der Fixiervorrichtung entnehmbar ist und die restlichen Trägerplatten in ihrer Position verbleiben.

Aus der europäischen Patentanmeldung 0 288 808 A2 ist ein Endverschlußgehäuse für Signal-Übertragungskabel, insbesondere Glasfaserkabel, bekannt, das aus zwei lösbar miteinander verbundenen Gehäuseteilen besteht. In dem einen Gehäuseteil sind die Lichtwellenleiter-Spleiße und im anderen Gehäuseteil die Überlängen von den Lichtwellenleiter-Adern untergebracht. Wenn mehrere solche Endverschlußgehäuse in einer Kabelmuffe untergebracht werden sollen, werden sie meist zu Kassettenblöcken zusammengefaßt, wobei sie mit Hilfe eines Bolzens gesichert werden. Dies führt allerdings zu Problemen, wenn eine dazwischen liegende Kassette entnommen werden muß. Dies gilt für alle Montagetechnologien, bei denen zum Spleißen nicht die einzelne Faser, sondern die gesamte Spleißkassette an das Spleißgerät gebracht wird. In einer Kabelmuffe existieren meist mehrere Spleißkassettenblöcke aus zwei bis fünfzehn Spleißkassetten, an die von jeder Seite Adernbündel herangeführt werden. Ein solcher Block wird geschlossen aus der Kabelmuffe genommen und gegebenenfalls auf einer Montagehilfe abgelegt. Die Spleißkassetten müssen von oben her abgenommen und auf einem anderen Block abgelegt werden, um an die Spleißkassette heranzukommen, die gebraucht wird. Dabei ist zu beachten, daß die Anschlußadern sich nicht miteinander verschlingen. Das Herausnehmen bzw. Einlegen eines Kassettenblockes aus der bzw. in die Kabelmuffe oder das Gestell ist oft mit komplizierten Drehungen verbunden, um die Aderlängen entsprechend ihrer zulässigen Biegeradien auszuformen.

Aus EP 0 367 477-A3 ist eine Kabelmuffe bekannt,in der eine Anordnung zum Ablegen von Spleißkassetten angeordnet ist, wobei eine Spleißkassette aus einer Trägerplatte und einem Deckel besteht. Außerdem enthält eine Spleißkassette Fixierungen für Lichtwellenleiter-Spleiße und Aufnahmen für Überlängen von Lichtwellenleitern. Die Spleißkassetten sind übereinander angeordnet, wobei jede Spleißkassette für sich entnommen werden kann.

Für vorliegende Erfindung ergibt sich nun die Aufgabe, eine Anordnung zum Ablegen von Spleißkassetten für Lichtwellenleiter-Adern zu schaffen, bei der eine einfache und montagefreundliche Aufnahme einzelner Spleißkassetten möglich ist. Die gestellte Aufgabe wird mit Hilfe einer Anordnung der eingangs erläuterten Art dadurch gelöst, daß die Fixiervorrichtung einzelne Fächer aufweist, in denen die Trägerplatten mit den darauf montierten Spleißkassetten und den Aufnahmen für die Überlängen der Lichtwellenleiter-Adern einzeln eingeführt sind.

So ist nun durch die Erfindung von Vorteil, daß Bündeladern von Glasfaserkabeln, deren Glasfasern in Spleißkassetten verspleißt sind, so abgelegt werden können, daß bei einem Block von mehreren Spleißkassetten jede einzeln mühelos herausnehmbar ist und am Spleißgerät abgelegt werden kann, ohne daß andere Spleißkassetten aus ihrer Ablage genommen werden müssen. Dabei muß in der Kabelmuffe bzw. dem Gestell unter Einhaltung der zulässigen Biegeradien der benötigte Adernvorrat abgelegt werden, damit die Spleißkassetten herausgenommen werden können. Dieser Adernvorrat beträgt jeweils etwa 0,5 bis 1,5 m.

Die vorliegende Erfindung sieht nun auch vor, daß jede Spleißkassette zusammen mit der ihr zugeordneten Aufnahme für Adernvorrat ein separates "Fach" vorgesehen ist, wobei diese Einheit auf einer Trägerplatte angeordnet wird. Diese Einheit wird dann entsprechend in einer Fixiervorrichtung gehalten. Die Aufnahme für den Spleißvorrat kann nun unmittelbar auf der Trägerplatte angeordnet sein. Eine andere Anordnung sieht vor, daß die Spleißkassette oberhalb und die Aufnahme für den Adernvorrat unterhalb der Trägerplatte liegen. Es ist auch eine U-förmige Trägerplatte möglich, die aus zwei beweglichen Schenkeln besteht, auf denen gegenüberliegend die Spleißkassette und die Aufnahme für Adernvorrat fixiert sind. Die Aufnahme kann ebenfalls in Form einer Spleißkassette oder in Form von Haken oder Winkeln ausgebildet sein. Letztere Ausführungen dienen lediglich als Führungen für die Lichtwellenleiter-Adern und können direkt an der Trägerplatte befestigt sein.

Die Spleißkassetten können zusammen mit Aufnahmen für den Adernvorrat in der erforderlichen Anzahl über Klapp-, Steck- oder Schiebemechanismen miteinander verbunden sein. Damit ist möglich, leicht an die jeweils gewünschte Spleißkassette zu kommen. Die gewünschte Spleißkassette wird von der Trägerplatte, die zugleich den Adernvorrat trägt, abgehoben und der Adernvorrat aus der Aufnahme herausgezogen. Die Spleißkassette kann nun leicht zum Spleißgerät gebracht werden. Beim Zurückführen der Spleißkassette wird nach dem Spleißvorgang erst der Adernvorrat in den dafür vorgesehenen Raum bzw. Aufnahme abgelegt und dann wird die Spleißkassette wieder auf der Trägerplatte befestigt.

Eine weitere Möglichkeit der Spleißkassettenablage in der Kabelmuffe oder im Gestell ist eine Blockvariante. Die erforderliche Anzahl von Spleißkassetten wird direkt übereinander gelegt und in geeigneter Weise miteinander befestigt. In praktikabler Weise wird gemäß der Erfindung zum Beispiel eine fächerförmige Fixiervorrichtung verwendet, in welche die Spleißkassetten eingesteckt werden. Durch entsprechende Arretierungselemente werden die Spleißkassetten fixiert, die jedoch bei Bedarf lösbar sind. Die gewünschte Spleißkassette läßt sich dann einzeln oder im Block herausnehmen, ohne daß andere Spleißkassetten bewegt werden müssen. Dadurch ist eine gute Übersichtlichkeit gegeben, da nur jeweils bei der betroffenen Spleißkassette der Adernvorrat gelöst wird.

Die fächerförmige Fixiervorrichtung kann am Rückteil oder entlang einer Kante auch mit einem Klappmechanismus mittels Scharniere oder mit Hilfe von Gelenken aufklappbar sein, das heißt, durch Wegklappen höher liegender Spleißkassetten kann man zur Ebene der gewünschten Spleißkassette kommen. Auf diese Weise bleibt ebenfalls die Übersichtlichkeit gewahrt.

Von Vorteil ist nun gemäß der Erfindung auch die Ausformung der Bündeladern, so werden nun die Spleißkassetten nur von einer Seite her verkabelt (sogenannter Butt-Spleiß). Damit ist es möglich, alle Adern, die an den Spleißkassettenblock gehen, zu einem Bund zusammenzufassen. Ein solcher Bund kann nun je nach Gegebenheiten und Länge zusammengerollt oder in Schlaufen gebogen werden, um den Adernvorrat in der Kabelmuffe oder im Gestell verstauen zu können. Zum Spleißen wird dann jeweils ein Block im Ganzen aus der Kabelmuffe oder aus dem Gestell genommen und auf dem Spleißgerät abgelegt.

Die Erfindung wird nun anhand von zehn Figuren näher erläutert.
- Figur 1: zeigt eine Trägerplatte mit einseitiger Anordnung von Spleißkassette und Aufnahme für Adernvorrat.
- Figur 2: zeigt eine Anordnung, bei der die Spleißkassetten und die Aufnahme auf beiden Seiten der Trägerplatte befestigt sind.
- Figur 3: zeigt eine U-förmige Trägerplatte.
- Figur 4: zeigt die herkömmliche Blockzusammenstellung von Spleißkassetten.
- Figur 5: zeigt eine fächerförmige Fixiervorrichtung für Spleißkassetten mit Trägerplatten.
- Figur 6: zeigt eine fächerförmige Fixiervorrichtung mit einseitigem Klapp- bzw. Gelenkmechanismus.
- Figur 7: zeigt eine Kabelmuffe mit einer Anordnung gemäß der Erfindung.
- Figur 8: zeigt einen Blockträger für Spleißkassetten in Seitenansicht.
- Figur 9: zeigt den Blockträger nach Figur 8 in Rückansicht.
- Figur 10: zeigt das in Figur 8 angedeutete Detail.

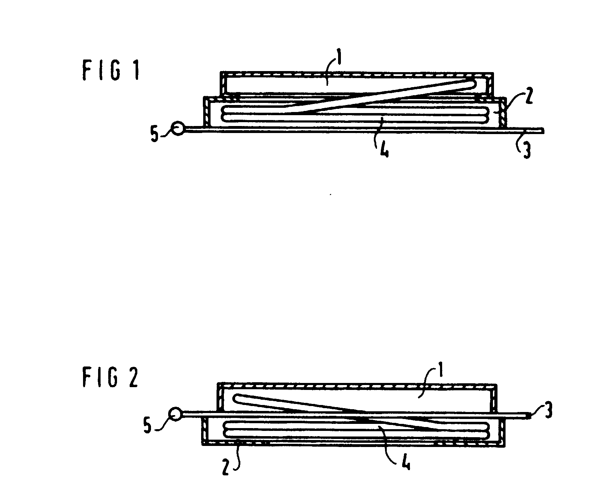

Figur 1 zeigt schematisch den Aufbau einer Spleißeinheit, bestehend aus der eigentlichen Spleißkassette 1, in der die Spleiße enthalten sind, und einer darunter liegenden Aufnahme 2 für entsprechenden Adernvorrat 4. Die einzelnen Adern aus dem Adernvorrat 4 werden über entsprechend gelegene Öffnungen in die Spleißkassette 1 geführt. Diese Doppeleinheit, die trennbar ist, wird bei dieser Ausführung auf einer Seite einer Trägerplatte 3 befestigt. die Trägerplatte 3 hat beispielsweise an einer Kante geeignete Dreh- oder Befestigungselemente 5, über welche die Befestigung in der Fixiervorrichtung erfolgt.

Figur 2 zeigt, daß die Trägerplatte 3 auch beidseitig bestückt werden kann, wobei hier auf der oberen Seite die Spleißkassette 1 und auf der unteren Seite die Aufnahme 2 für Adernvorrat 4 befestigt sind. Die Aufnahme 2 kann zum Beispiel auch nur aus Winkeln gebildet werden,. die für den Adernvorrat 4 eine Führung und Halterung als Aufnahmeraum bilden.

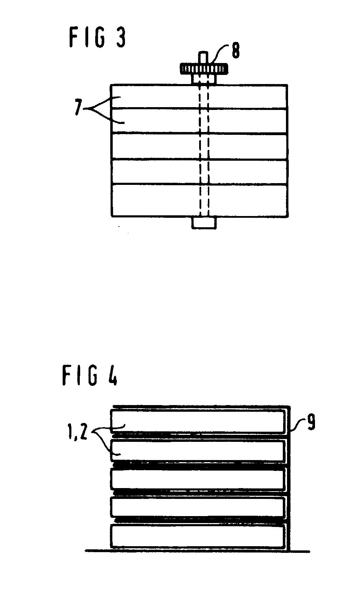

Die Figur 3 zeigt einen herkömmlichen Spleißblock, der aus den einzelnen Spleißkassetten 7 gebildet wird. Die einzelnen Spleißkassetten 7 werden mittels eines Bolzens 8 zusammengehalten. Wenn nun eine Spleißkassette 7 zugänglich gemacht werden muß, kann dies nur durch Lösung des gesamten Blockes erfolgen, wodurch die Übersichtlichkeit insbesondere bezüglich des Adernvorrates verlorengeht.

Die Figur 4 zeigt nun in schematischer Weise eine Fixiervorrichtung 9 gemäß der Erfindung. So sind hier mehrere U-förmige Fächer gebildet, in welche die bestückten Trägerplatten mit den Spleißkassetten 1 und ihren dazugehörigen Aufnahmen 2 eingeschoben werden können. Auf diese Weise ist eine übersichtliche Ablage gegeben, wobei je Trägerplatte für sich zugänglich ist, ohne daß eine andere Trägerplatte bewegt werden muß.

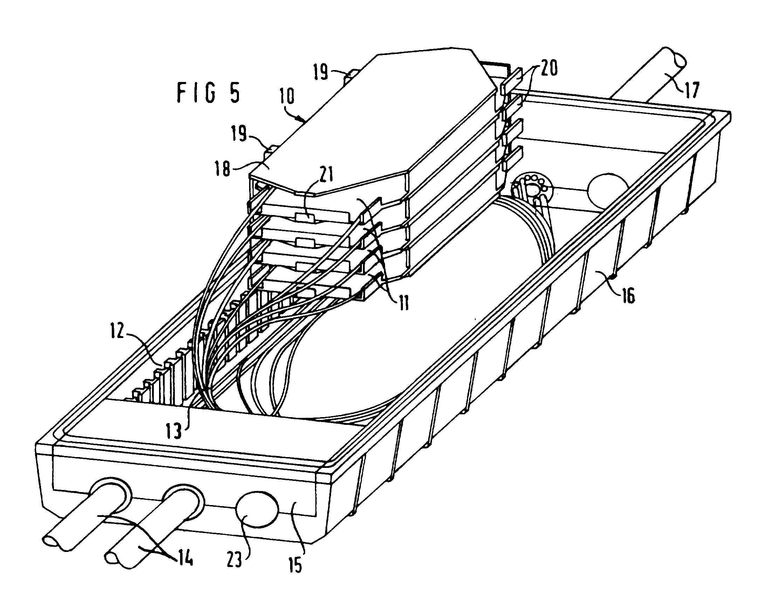

Die praktische Ausführung eines Kassettenträgers 10 einschließlich der Ablage in der Muffe 16 soll im weiteren durch Figur 5 beschrieben werden. Diesem Kassettenträger 10 liegt die Ausführung nach Figur 4 zugrunde.

Beliebig viele Winkelbleche 18 (hier vier Stück) werden an zwei Stäben 19 befestigt, die gleichzeitig zur Ablage in der Muffe 16 dienen. Die Winkelbleche 18 sind in einem Abstand, der der Höhe einer Spleißkassette 11 entspricht, übereinander angeordnet. Zwei seitlich angebrachte speziell ausgeformte Winkel 20 positionieren die Spleißkassetten 11 in Längsrichtung. Ein Herausrutschen nach vorn wird durch eine Arretierung, z.B. eine Noppe im Winkelblech 18 unter dem Zentrum der Spleißkassette 11 verhindert.

Die oberste Spleißkassette 11 ist mit einem Deckblech abgedeckt. Dieses hat an der Vorderkante einen Überstand. Daran kann man durch Anheben den Kassettenträger 10 etwas anlüften, so daß sich die Spleißkassetten 11 über den Noppen leicht entfernen lassen. Die Winkelbleche 18 sind an den Seiten abgeschrägt, um ein leichteres Einführen und Entnehmen der Spleißkassetten 11 zu gewährleisten.

Der gesamte Kassettenträger 10 wird mit den oben genannten Stäben 19 in ein geeignetes Gegenlager 12 in der Muffe 16 gesteckt bzw. gerastet. Verfielfacht man diese Gegenlager 12 z.B. an beiden Muffenlängsseiten, so kann der Kassettenträger 10 an jeder Stelle in der Muffe 16 positioniert werden, was in Hinblick auf optimale Führung der Adern wichtig ist. Die Länge des Adernbundes spielt dabei nicht mehr die Rolle, wie bei vorangegangenen Muffen, da hier eine wesentlich höhere Variabilität gegeben ist.

Weiterhin besteht die Möglichkeit durch Stecken des Kassettenträgers 10 in eine höhere Montageposition (der Halter ragt dann über den Muffenrand hinaus) die Montagearbeiten wie Spleißen, Kabelabfangung, Einführen eines zusätzlichen Kabels innerhalb des Muffenunterteils usw. leichter durchführen zu können.

Das Prinzip des variabel-steckbaren Kassettenträgers 10 gestattet auch den Einsatz anderer Spleißkassetten und anderer Spleißarten. So können z.B. auch Spleißkassetten verwendet werden, bei denen die Adern nicht wie bei der Einheitsspleißkassette an der Schmalseite, sondern an der Breitseite herausgeführt werden.

In dieser Figur ist weiterhin erläutert, daß der Adernvorrat 22 z.B. unterhalb des Kassettenträgers 10 geführt werden kann. An den Stirnseiten der Kabelmuffe 16 sind beispielsweise Dichtkörper 15 mit halben Einführungsöffnungen eingesetzt, die mit entsprechenden Aussparungen in der Stirnseite der Kabelmuffe 16 die Einführungsöffnungen 23 für die Kabel 14 bzw. 17 bilden. Diese Kabeleinführungsöffnungen können gegebenenfalls jeweils dem Durchmesser der Kabel angepaßt sein. Die Abdichtung erfolgt in an sich bekannter Weise mit Dichtungsmitteln und/oder Preßmitteln.

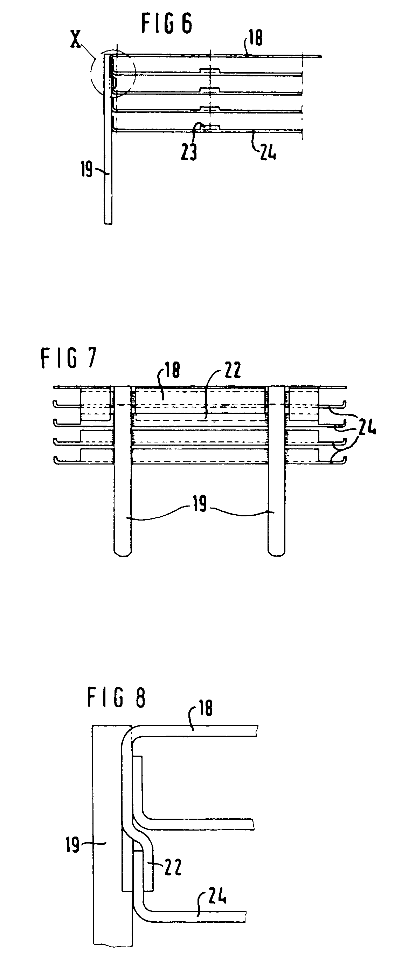

Figur 6 zeigt den Blockträger mit den Stäben 19 und den Ablageblechen 24 für die Spleißkassetten. Die Ablagebleche 24 sind mit ausgeprägten Noppen 23 versehen, die zur Fixierung der Spleißkassetten dienen, wobei diese in entsprechende Aussparungen einrasten. Das oberste Winkelblech 18 steht mit entsprechendem Überstand als Schutz über. Das Detail X wird in Figur 8 erläutert.

Figur 7 zeigt den Blockträger mit den Ablageblechen 24 und dem obersten Winkelblech 18 in Rückansicht. Dabei geht hervor, daß das oberste Winkelblech 18 eingehängt werden kann.

Figur 8 zeigt wie das Winkelblech 18 mit entsprechenden Kröpfungen an seiner Längskante 22 so geformt ist, daß es zwischen zwei Ablageblechen 24 eingehängt werden kann.

## Patentansprüche

1. Ablageanordnung von Spleißkassetten zur Verwendung in einer Kabelmuffe (16), bestehend aus mehreren Spleißkassetten (1, 11) für Lichtwellenleiter, aus einer Aufnahme für Überlängen von Lichtwellenleitern für jede Spleißkassette (1, 11) und einer Trägerplatte (3) für jede Spleißkassette (1, 11), wobei mehrere Trägerplatten (3) in einer Fixiervorrichtung (9) gehalten sind und jede Trägerplatte (3) einzeln aus der Fixiervorrichtung (9) entnehmbar ist und die restlichen Trägerplatten (3) in ihrer Position verbleiben,
**dadurch gekennzeichnet,**
daß die Fixiervorrichtung (9) einzelne Fächer aufweist, in denen die Trägerplatten (3) mit den darauf montierten Spleißkassetten (1) und den Aufnahme (2) für die Überlängen (4) der Lichtwellenleiter-Adern einzeln eingeführt sind.

2. Anordnung nach Anspruch 1,
**dadurch gekennzeichnet,**
daß einzeln lösbare Arretierungselemente für die Trägerplatten (3) in der Fixiervorrichtung (9) angeordnet sind.

3. Anordnung nach einem der Ansprüche 1 bis 2,
**dadurch gekennzeichnet,**
daß die einzelnen Fächer der als Kassettenträger (10) ausgebildeten Fixiervorrichtung aus Winkelblechen (18) bestehen, die in einem der Höhe einer Spleißkassette (11) entsprechenden Abstand übereinander an Stäben (19) angeordnet sind, daß die Stäbe (19) in geeignete Gegenlager (12) einer Kabelmuffe (16) einsteckbar sind.

4. Anordnung nach Anspruch 3,
**dadurch gekennzeichnet,**
daß der Kassettenträger (10) innerhalb einer Kabelmuffe (16) so angeordnet ist, daß der Adernvorrat (22) der Kabel (14) zwischen der Kabeleinführung des Dichtkörpers (15) der Kabelmuffe (16) und dem Zugang zum Kassettenträger (9, 10) mit Längenplus in der Kabelmuffe (16) unterhalb des Kassettenträgers (9, 10) eingelegt ist.

## Claims

1. Depositing arrangement of splicing cassettes for use in a cable closure (16), comprising a plurality of splicing cassettes (1, 11) for optical fibres, a receptacle for excess lengths of optical fibres for each splicing cassette (1, 11), and a carrier plate for each splicing cassette (1, 11), a plurality of carrier plates (3) being held in a fixing device (9) and it being possible for each carrier plate (3) to be moved individually from the fixing device (9), and the remaining carrier plates (3) remaining in their position, characterized in that the fixing device (9) has individual compartments in which the carrier plates (3) are individually inserted with the splicing cassettes (1) mounted thereupon and the receptacles (2) for the excess lengths (4) of the buffered optical fibres.

2. Arrangement according to Claim 1, characterized in that the individually releasable locking elements for the carrier plates (3) are arranged in the fixing device (9).

3. Arrangement according to one of Claims 1 to 2, characterized in that the individual compartments of the fixing device constructed as a cassette carrier (10) are comprised of angular plates (18) which are arranged above one another on rods (19) at a spacing corresponding to the height of a splicing cassette (11) such that the rods (19) can be plugged into suitable abutments (12) of a cable closure (16).

4. Arrangement according to Claim 3, characterized in that the cassette carrier (10) is arranged inside a cable closure (16) such that the spare buffered fibres (22) of the cables (14) are laid in the cable closure (16) with excess length below the cassette carrier (9, 10) between the cable entry of the sealing block (15) of the cable closure (16) and the access to the cassette carrier (9, 10).

## Revendications

1. Dispositif de distribution de cassette d'épissure pour utilisation dans un manchon (16) de câble, constitué de plusieurs cassettes (1,11) d'épissures de guide d'ondes lumineuses, d'un dispositif de réception de surlongueurs de guides d'ondes lumineuses pour chaque cassette (1,11) d'épissure et d'une plaque (3) de support pour chaque cassette (1,11) d'épissure, plusieurs plaques (3) de support étant retenues dans un dispositif (9) d'immobilisation et chaque plaque (3) de support pouvant être retirée individuellement du dispositif (9) d'immobilisation et les plaques (3) de support restantes demeurant en leur position,
caractérisé en ce que le dispositif (9) d'immobilisation comporte des cases individuelles, dans lesquelles les plaques (3) de support comportant les cassettes (1) d'épissure qui y sont montées et les dispositifs (2) de réception des surlongueurs (4) des brins de guides d'ondes lumineuses sont introduits individuellement.

2. Dispositif suivant la revendication 1, caractérisé en ce que des éléments de blocage individuellement amovible des plaques (3) de support sont montés dans le dispositif (9) d'immobilisation.

3. Dispositif suivant l'une des revendications 1 à 2, caractérisé en ce que les cases individuelles du dispositif d'immobilisaton réalisées en support (10) de cassette sont constituées de tôles (18) formant cornières, qui sont superposées sur des barreaux (19) à une distance correspondant à la hauteur d'une cassette (11) d'épissure, et en ce que les barreaux (19) peuvent être enfichés dans des butées (12) adaptées d'un manchon (16).

4. Dispositif suivant la revendication 3, caractérisé en ce que le support (10) de cassette est monté à l'intérieur d'un manchon (16) de câble de telle manière que la réserve (22) de brins des cables (14) est insérée entre l'introduction de câble de l'élément (15) d'étanchéité du manchon (16) de câble et l'accès au support (9,10) de cassette, en ayant une surlongueur dans le manchon (16) de câble au-dessous du suppport (9,10) de cassette.
